# EUROPEAN PATENT SPECIFICATION

(11) **EP 2 231 885 B1**
(45) Date of publication and mention of the grant of the patent: **07.03.2012**
(21) Application number: 09701078.9
(22) Date of filing: 09.01.2009
(51) Int. Cl.: C22B 1/20, F27B 21/02, G01B 11/24, G01F 11/26, F27B 21/06

(54) **METHOD AND APPARATUS FOR MONITORING THE OPERABILITY OF A TRAVELLING GRATE IN A SINTERING MACHINE**
VERFAHREN UND VORRICHTUNG ZUR ÜBERWACHUNG DER BETRIEBSFÄHIGKEIT EINES WANDERROSTS IN EINER SINTERANLAGE
PROCÉDÉ ET APPAREIL POUR SURVEILLER L'APTITUDE AU FONCTIONNEMENT D'UNE GRILLE MOBILE D'UN DISPOSITIF DE FRITTAGE

(30) Priority: 22.01.2008 DE 102008005449
(43) Date of publication of application: 29.09.2010
(73) Proprietor: Outotec OYJ, 02200 Espoo (FI)
(72) Inventor: SCHUBERT, Marian, 64390 Erzhausen (DE); WECKES, Jan, 61462 Königstein (DE); SCHÄFER, Robert, 35279 Neustadt (DE); HÜBNER, Alexander, 61184 Karben (DE)
(74) Representative: KEIL & SCHAAFHAUSEN Patentanwälte
(86) International application number: PCT/EP2009/000073
(87) International publication number: WO 2009/087101

(56) References cited:
- CN-A- 1 645 041
- DE-A1- 19 600 231
- JP-A- 4 276 030
- JP-A- 7 187 555
- JP-A- 7 324 921
- JP-A- 8 012 259
- JP-A- 2000 154 972

## Description

This invention relates to a method and an apparatus for monitoring the operability of a travelling grate used for the transport of goods exposed to e.g. thermal and/or mechanical loads, in particular bulk goods, for instance in a plant for agglomerating ores.

In processes for agglomerating, e.g. sintering and/or pelletizing ores (travelling grate processes), travelling grates, e.g. consisting of individual pallet cars, are used, which for instance in the form of an endless chain of pallets transport the raw material through an indurating furnace. The pallet cars are exposed to extreme thermal and mechanical loads, which lead to a creeping and permanent deformation, in particular deflection, of the crossbeams of the pallet cars.

This problem so far has been solved inadequately, in that an alarm was issued via mechanical limit switches or in that the deformation was also checked without monitoring means in standard intervals for maintenance work.

From JP 2000 154 972 A, an apparatus for detecting the absence or breakage of a grate bar of a pallet car of a sintering machine is known. When the grate bar reaches a special position, a trigger signal generating device transmits a signal to an image recording device, comprising a grate number reading device and a CCD camera, in order to read out the grate number and record an image. An illuminating device, comprising a number of halogen lights, transmits light to the image recording device without shielding by a rib of the grating. A video signal of the image recording device is transmitted by a machine-side control means via a controller. The control means is equipped with a personal computer, an image processing device and a cathode ray tube. A signal then is transmitted from the image recording device to the image processing device, in order to process the image. At the same time, the result is displayed on a cathode ray tube. Such method is not suitable for overcoming the above-mentioned problem of a deformation of crossbeams of a travelling grate.

Similar methods are known from JP 07 110 193 A, JP 04 276 030 A and JP 07 260 366 A, in which laser light also is used in part for forming an image of the grating. A foresighted maintenance is not possible with this method either.

Therefore, it is the object of the present invention, to provide a method as mentioned above, in which an only gradual deformation, in particular deflection, of crossbeams of a pallet car also can safely be detected, so that a foresighted maintenance can be ensured. For this purpose, a suitable apparatus should be proposed.

In a method as mentioned above, this object for instance substantially is solved in that by means of a contactless distance measurement the deformation, in particular the deflection, of the at least one crossbeam of the respective pallet car is measured at a specified point of the path of circulation of the travelling grate, the respective crossbeam measured is identified automatically and the distance measurement value signals and the identification measurement value signals are combined for evaluation. A pallet car includes at least one, but usually two to seven crossbeams, which can be distinguished and allocated individually. In this way, it is possible with simple means to check a possible deformation of a crossbeam with every circulation of the travelling grate at the point where such deformations primarily occur under the high thermal load, and upon monitoring forward the same to a control center, in which it can be detected and decided whether the corresponding pallet car or crossbeam still is operable or not. Deformation also is meant to include a breakage or damages, such as cracks, which can be detected by a contactless distance measurement.

Preferably, the distance measurement value signals are each historically stored for a certain pallet car or crossbeam and are possibly represented graphically, e.g. with a recording instrument or monitor. In this way, the monitoring personnel both can constantly observe the progress of a deformation and decide in time on a maintenance intervention, e.g. by replacing the pallet car or repairing the same. As a result, e.g. maintenance and repair interventions in the plant become plannable.

It is advantageous in particular when the rate of change of the distance measurement value signal is determined as a criterion for evaluation.

To increase the safety of the method, it can furthermore be provided that an alarm signal is issued when the distance measurement value signal exceeds or falls below or violates a specified threshold value, in order to clearly alert the operating personnel to the necessity of a maintenance or repair. The evaluation of the signals substantially is effected automatically, and the operating personnel is alerted to the situation in particular when specified limit values are exceeded or not reached or violated.

For executing the method, an acoustic or optical method with a low temperature sensitivity, e.g. an optical reflection method, preferably a laser reflection method, can be used in particular for distance measurement, from which the deformation can be derived. In addition, it is also possible to detect other damages of a travelling grate by additional, alternative methods, e.g. by acoustic, optical or electrical signals.

The identification of the pallet cars or crossbeams, which is required for allocation of the distance measurement value signals to the individual pallet cars or crossbeams, can be effected acoustically or mechanically by means of a contactless detection or scanning of identification signs, for instance by means of electromagnetic waves, such as light and/or radio waves.

In accordance with the invention, the distance measurement preferably is executed by scanning at that point of the pallet car where the greatest deformations must be expected, preferably in the middle of the crossbeams.

In addition to the distance measurement for determining the degree of deformation, distance measurements can be executed at two reference measurement points, e.g. each to the right and to the left on the outside of the pallet car. By means of the reference points, a wrong position of the pallet car or of a crossbeam can be detected and be eliminated from the deformation measurement.

An apparatus for performing the method described above in particular includes a central unit for recording, allocating, evaluating, storing and/or outputting measurement value signals, a measuring means including at least one distance sensor, preferably a laser reflection sensor, for the distance measurement, and at least one identification means. This identification means can be configured e.g. as a line scanner.

In a particular embodiment of the invention, the distance measuring means is allocated to the return path of the travelling grate,
of an endless chain of pallet cars, the so-called return strand. This involves the advantage that the contactless distance measurement substantially points downwards and the distance of the crossbeams of the middle part of the travelling grate can freely be surveyed from above.

Preferably, a plurality of distance sensors are arranged in at least one line in the measuring means, in order to scan various points for the distance measurement, wherein the measuring means can be cooled, possibly by air cooling, in order to increase the service life thereof. The measuring means can be utilized simultaneously or one after the other. In principle, several lines are also conceivable, which are operated simultaneously or one after the other, in particular to be able to perform the maintenance of one sensor line without interruption of operation.

During the process, the distance measuring means preferably operates continuously, so that the presence of a crossbeam can constantly be detected. On the other hand, an existing identification means, which for instance is configured as a bar code scanner, for the contactless scanning of the identification sign on the respective pallet car is switched off upon forwarding the identification measurement value signals, until the next pallet car is scanned. The service life of the identification means can considerably be increased thereby.

In this connection, the identification means can be activated by a position detector for a pallet car, which includes for instance an optical, acoustic or inductive sensor.

For the proper allocation of the distance measurement value signals to the identification measurement value signals, the position detector preferably is adjustable. Preferably, the adjustment needs to be made only once during installation.

To avoid having to take care of the identification of the pallet car when replacing the same, identical identification signs preferably are arranged on both sides of the pallet car at the same point each in the middle, so that the reference of the individual pallet car to the detection of a deformation is maintained.

The method of the invention basically is suitable for all transport operations of goods on travelling grates and the like, which involve the risk that a permanent deformation or damage, e.g. breakage, of the travelling grates occurs. Examples for these methods include e.g. heating in the food industry, also when using conveyor belts, chain conveyors, belt-and-bucket elevators or scraper floors. In the case of belt-and-bucket conveyors, for instance, the change of the bucket can be detected by a change in shape or by damages.

The method of the invention also comprises a method for data processing the signals by observing the changes of the travelling grate or of the pallet car and by identifying the travelling grate or the pallet car , in which the data are combined. This method for data processing also can include the conversion of signals or auxiliary data into another format or reading another format into this method. In accordance with the invention, this method for data processing can include a method for evaluating the measured signals and a method for the e.g. statistical or graphic representation and output of the measured signals on e.g. electric or mechanical media. In addition, methods for adjusting limit values and for generating signals for the operating personnel can be included, which indicate or provide for a maintenance or repair or the planning thereof. This method can also elaborate or specify a maintenance or repair schedule.

Further objectives, features, advantages and possible applications of the present invention can be taken from the following description of embodiments and the drawing. All features described and/or illustrated form the subject-matter of the invention per se or in any combination, also independent of their inclusion in individual claims or their back-reference.

In the drawing:
- Fig. 1: shows a simplified schematic representation of an apparatus realizing the invention for performing a method for monitoring the operability of a travelling grate used for the transport of goods, and
- Fig. 2: shows a schematic longitudinal view of a station for agglomerating ores (travelling grate feeding station), in which the invention preferably is employed.

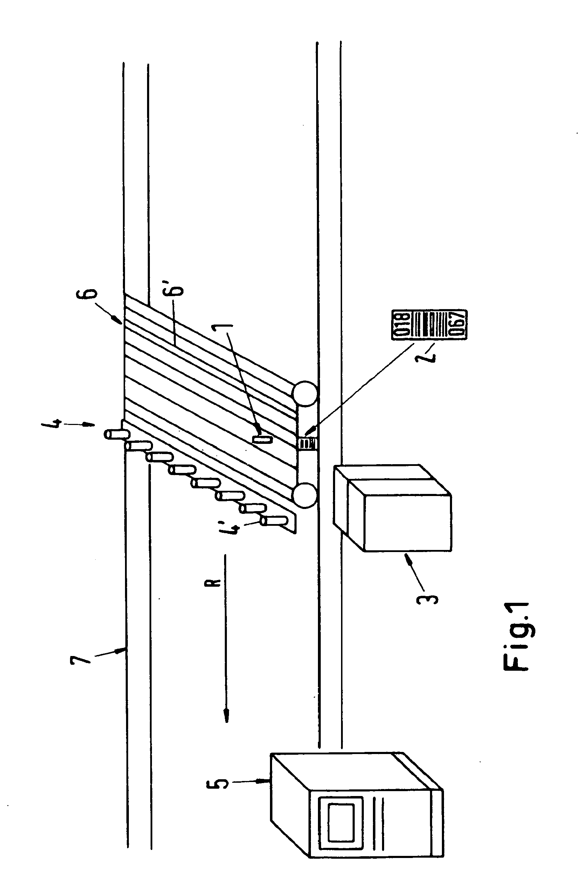

Fig. 1 shows a simplified representation of an apparatus of the invention for performing a method for monitoring the operability of a pallet car 6, which is used for the transport of goods exposed for instance to high thermal and/or mechanical loads, in particular bulk material, and which moves in the direction R on the return side 7 of a path of circulation for instance in a plant for agglomerating ores. At a specified point, a means 4 for the contactless measurement of the distance of the pallet car 6, in particular of its crossbeam 6', is allocated to the return side 7. By means of the distance measurement, the deformation, in particular the deflection of the crossbeams 6', of the respective travelling grate 6 can be measured. For this purpose, individual distance sensors 4' are provided, which can be directed onto different regions of the pallet car 6. The distance measurement is initiated by a position detector 1 including a position trigger sensor, which adjacent to the distance measuring means 4 likewise is allocated to the return side 7. On each pallet car 6, an identical identification sign 2 is mounted in the middle on both sides each, which identification sign carries a bar code and possibly a pallet car number. The bar code is automatically readable by means of an identification means 3 constituting a bar code scanner for identifying the pallet car 6 moving past the same. The distance measurement value signals of the distance measuring means 4 and the identification measurement value signals of the bar code scanner 3 are combined in a central unit 5 for detection, allocation, evaluation, storage and/or output. In this way, the deformation can be detected and monitored for each pallet car 6 on the basis of the thermal and/or mechanical load. The central unit 5 includes a display, on which the evaluation of the measurement values for the individual pallet cars 6 can be represented historically.

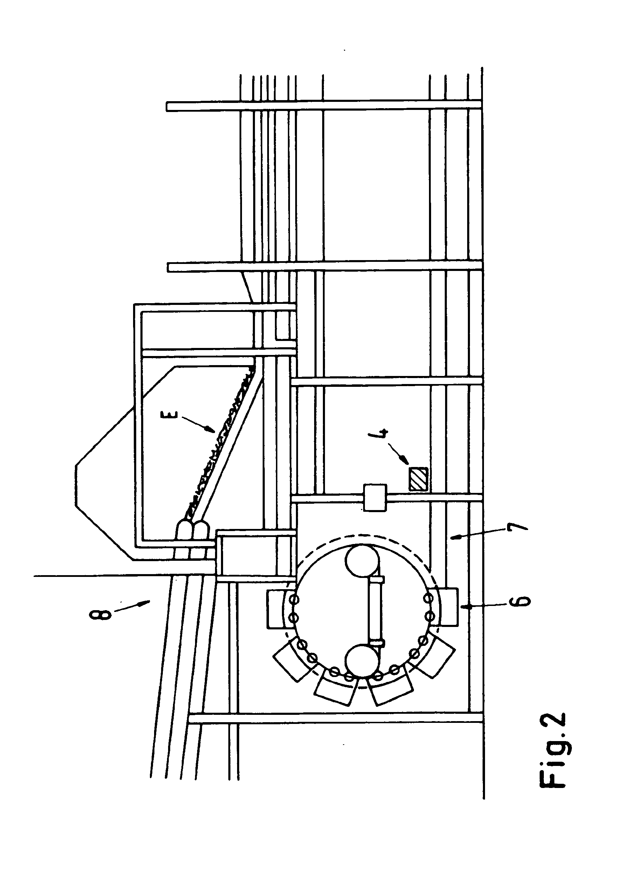

Fig. 2 serves to illustrate the position of the distance measuring means 4 in the vicinity of the return side 7 of the path of circulation of the travelling grate with pallet cars 6 in a plant for agglomerating ores E, which are charged to the individual pallet cars 6 before the agglomeration process in the charging station 8. On the return path, the distance measurement then is effected for determining a deformation on the pallet cars 6 moving past the measuring means 4. It can be seen that the distance measurement with respect to the pallet cars 6 is effected from above, so that in particular a deformation of the crossbeams 6' of the pallet cars 6 can reliably be detected and be monitored for preventive maintenance. At the same time, soiling of the distance sensors 4' is avoided thereby.

### List of Reference Numerals

- 1: position detector, position trigger sensor
- 2: identification sign (bar code, pallet car number)
- 3: identification means, bar code scanner
- 4: distance measuring means
- 4': distance sensors
- 5: central unit, computer cabinet
- 6: pallet car
- 6': crossbeam
- 7: return side
- 8: charging station

- E: ores
- R: direction of movement of pallet car

## Claims

1. A method for monitoring the operability of a travelling grate used for the transport of goods exposed to high thermal and/or mechanical loads, in particular bulk material, in particular in a plant for agglomerating ores, in which by means of a contactless distance measurement the deformation, in particular the deflection of at least one crossbeam of the travelling grate is measured at a specified point of the path of circulation of the travelling grate, the respective crossbeam of the travelling grate is automatically identified and the distance measurement value signals and the identification measurement value signals are combined for evaluation.

2. The method according to claim 1, wherein the travelling grate consists of individual pallet cars with at least one crossbeam each.

3. The method according to claim 1 or 2, wherein the distance measurement value signals for a particular pallet car or crossbeam are each stored historically and possibly represented graphically.

4. The method according to any of the preceding claims, wherein the rate of change of the distance measurement value signals is determined for planning maintenance and repair interventions.

5. The method according to any of the preceding claims, wherein an alarm signal is issued, when the distance measurement value signal exceeds or falls below or violates a specified threshold value.

6. The method according to any of the preceding claims, wherein the distance measurement is effected by means of an acoustic or optical method, e.g. an optical reflection method, preferably a laser reflection method and/or that the distance measurement is effected by scanning at several points of the pallet car, preferably in the middle of the respective crossbeam and/or that the distance measurement additionally is effected at two reference measurement points, e.g. each to the right and to the left on the outside, of the pallet car.

7. The method according to any of the preceding claims, wherein the identification of the pallet cars is effected acoustically or mechanically by means of a contactless detection or scanning of identification signs, for instance by means of electromagnetic waves, such as light and/or radio waves.

8. An apparatus for monitoring the operability of a travelling grate with pallet cars (6) used for the transport of goods exposed to high thermal and/or mechanical loads, in particular ,for performing the method according to any of the preceding claims, comprising a central unit (5) for recording, allocating, evaluating, storing and/or outputting measurement value signals, a distance measuring means (4) allocated to the return path of the travelling grate on its path of circulation, preferably to the return side (7) of the travelling grates and including at least one distance sensor (4'), preferably laser reflection sensor, for contactless distance measurement of part of the travelling grate, and at least one identification means (3) for identifying a pallet car (6) on said travelling grate.

9. The apparatus according to claim 8, wherein a plurality of distance sensors (4') are arranged in at least one line in the measuring means (4) and possibly can be switched on selectively.

10. The apparatus according to claims 8 or 9, wherein the measuring means (4) comprise cooling means possibly by air cooling, and that the measuring means (4) operates continuously during the process.

11. The apparatus according to any of claims 8 to 10, comprising an identification means (3), which for instance constitutes a bar code scanner, for the contactless scanning of an identification sign (2) on the respective pallet car (6), which upon forwarding the identification measurement value signals can be switched off until scanning the next pallet car (6).

12. The apparatus according to any of claims 8 to 11, wherein the identification means (3) is activated by a position detector (1) for the respective pallet car (6), which includes for instance an optical, acoustic or inductive sensor.

13. The apparatus according to any of claims 8 to 12, wherein the position detector (1) is adjustable for allocating the distance measurement value signals to the identification measurement value signals.

14. The apparatus according to any of claims 8 to 13, wherein identical identification signs (2) are each arranged on both sides of the pallet car (6) at the same point in the middle and/or that the identification sign (2) includes an automatically readable bar code, possibly completed by a pallet car number readable with the naked eye.

## Patentansprüche

1. Ein Verfahren zum Überwachen der Funktionsfähigkeit eines dem Transport von hohen thermischen und/oder mechanischen Beanspruchungen ausgesetzten Gütern, insbesondere von Schüttgut, dienenden Wanderrostes, insbesondere in einer Anlage zur Agglomeration von Erzen, bei welchem mittels einer berührungslosen Abstandsmessung die Verformung, insbesondere die Durchbiegung mindestens eines Querträgers des Wanderrostes an einer vorgegebenen Stelle der Umlaufbahn des Wanderrostes gemessen, der jeweilige Querträger des Wanderrostes selbsttätig identifiziert sowie die Abstandsmesswertsignale und die Identifikationsmesswertsignale zur Auswertung zusammengeführt werden.

2. Das Verfahren nach Anspruch 1, wobei der Wanderrost aus einzelnen Rostwagen mit jeweils mindestens einem Querträger besteht.

3. Das Verfahren nach Anspruch 1 oder 2, wobei die Abstandsmesswertsignale jeweils für einen bestimmten Rostwagen bzw. Querträger historisch gespeichert und gegebenenfalls grafisch dargestellt werden.

4. Das Verfahren nach einem der vorhergehenden Ansprüche, wobei die Änderungsgeschwindigkeit der Abstandsmesswertsignale zur Planung von Wartungs- und Instandhaltungseingriffen bestimmt wird.

5. Das Verfahren nach einem der vorhergehenden Ansprüche, wobei ein Alarmsignal abgegeben wird, wenn das Abstandsmesswertsignal einen vorgegebenen Schwellenwert unter- oder überschreitet bzw. verletzt.

6. Das Verfahren nach einem der vorhergehenden Ansprüche, wobei die Abstandsmessung mittels eines akustischen oder optischen Verfahrens, z.B. eines optischen Reflexverfahrens, vorzugsweise Laser-Reflexverfahrens, erfolgt, und/oder die Abstandsmessung durch Abtastung an mehreren Stellen des Rostwagens erfolgt, vorzugsweise in der Mitte des jeweiligen Querträgers und/oder die Abstandsmessung zusätzlich an zwei Referenzmesspunkten, z.B. jeweils rechts und links außen, des Rostwagens erfolgt.

7. Das Verfahren nach einem der vorhergehenden Ansprüche, wobei die Identifikation der Rostwagen mittels einer berührungslosen Erkennung oder Abtastung von Identifikationskennzeichen, zum Beispiel mittels elektromagnetischer Wellen, wie Licht- und/oder Radiowellen, akustisch oder mechanisch erfolgt.

8. Eine Vorrichtung zum Überwachen der Funktionsfähigkeit eines dem Transport von hohen thermischen und/oder mechanischen Beanspruchungen ausgesetzten Gütern, insbesondere von Schüttgut, dienenden Wanderrostes mit Rostwage (6), insbesondere zum Durchführen des Verfahrens nach einem der vorhergehenden Ansprüche, umfassend eine Zentraleinheit (5) zur Aufnahme, Zuordnung, Auswertung, Speicherung und/oder Ausgabe von Messwertsignalen, eine Abstandsmesseinrichtung (4), die dem Rückweg des Wanderrostes (6) auf seiner Umlaufbahn, vorzugsweise dem Rückkehrseite (7) des Wanderrosts, zugeordnet ist, und mindestens einen Abstandssensor (4'), vorzugsweise Laser-Reflexionssensor, für die kontaktlose Abstandsmessung eines Teils des Wanderrosts aufweist und mindestens eine Identifikationseinrichtung (3) zur Identifikation eines Rostwagens (6) des Wanderrosts.

9. Vorrichtung nach Anspruch 8, wobei mehrere Abstandssensoren (4') in mindestens einer Linie in der Messeinrichtung (4) angeordnet und gegebenenfalls wahlweise einschaltbar sind.

10. Eine Vorrichtung nach Anspruch 8 oder 9, wobei die Messeinrichtung (4) Kühlmittel, gegebenenfalls durch Luftkühlung, aufweist und dass die Messeinrichtung (4) während des Prozesses kontinuierlich läuft.

11. Eine Vorrichtung nach einem der Ansprüche 8 bis 10, umfassend eine zum Beispiel als Strichcode-Scanner ausgebildeten Identifikationseinrichtung (3) zur berührungslosen Abtastung eines Identifikationskennzeichens (2) an dem jeweiligen Rostwagen (6), welcher nach der Weitergabe der Identifikationsmesswertsignale bis zum Abtasten eines nächsten Rostwagens (6) abschaltbar ist.

12. Vorrichtung nach einem der Ansprüche 8 bis 11, wobei die Identifikationseinrichtung (3) von einem zum Beispiel einen optischen, akustischen oder induktiven Sensor aufweisenden Positionserkenner (1) für den jeweiligen Rostwagen (6) aktiviert wird.

13. Vorrichtung nach einem der Ansprüche 8 bis 12, wobei der Positionserkenner (1) für die Zuordnung der Abstandsmesswertsignale zu den Identifikationsmesswertsignalen verstellbar ist.

14. Vorrichtung nach einem der Ansprüche 8 bis 13, wobei identische Identifikationskennzeichen (2) auf beiden Seiten des Rostwagens (6) jeweils an gleicher Stelle in der Mitte angeordnet sind und/oder das Identifikationskennzeichen (2) einen selbsttätig ablesbaren Strichcode, gegebenenfalls ergänzt durch eine mit dem bloßen Auge ablesbare Rostwagennummer, aufweist.

## Revendications

1. Méthode pour surveiller l'efficacité opérationnelle d'une grille mobile servant au transport des matériaux exposés à des charges thermiques et/ou mécaniques élevées, en particulier les matériaux en vrac, en particulier dans une usine agglomérant les minerais, dans laquelle au moyen d'une mesure de distance sans contact, la déformation, en particulier la flèche d'au moins une traverse, de la grille mobile est mesurée à un point spécifique du chemin de circulation de la grille mobile, la traverse respective de la grille mobile est automatiquement identifiée et les signaux de valeur de mesure de la distance ainsi que les signaux de valeur de mesure de l'identification sont associés pour évaluation.

2. Méthode selon la revendication 1, dans laquelle la grille mobile comporte des wagons à palette individuels avec au moins une traverse chacun.

3. Méthode selon la revendication 1 ou 2, dans laquelle les signaux de valeur de mesure de la distance pour un wagon à palette spécifique ou une traverse sont chacun stockés historiquement et éventuellement représentés graphiquement.

4. Méthode selon l'une quelconque des revendications précédentes, dans laquelle le taux de variation des signaux de valeur de mesure de la distance est déterminé pour la maintenance de la planification et les interventions de réparation.

5. Méthode selon l'une quelconque des revendications précédentes, dans laquelle un signal d'alarme est émis, quand les signaux de valeur de mesure de la distance dépassent, tombent en-dessous ou enfreignent une valeur de seuil spécifiée.

6. Méthode selon l'une quelconque des revendications précédentes, dans laquelle la mesure de la distance est effectuée au moyen d'une méthode acoustique ou optique, ex. une méthode de réflexion optique, de préférence une méthode de réflexion laser et/ou la mesure de la distance est effectuée en balayant à plusieurs points du wagon à palette, de préférence au milieu de la traverse et/ou la mesure de la distance est en outre effectuée à deux points de mesure de référence, ex. chacun à droite et à gauche à l'extérieure du wagon à palette.

7. Méthode selon l'une quelconque des revendications précédentes, dans laquelle l'identification des wagons à palette est effectuée de manière acoustique ou mécanique au moyen d'une détection ou d' un balayage sans contact des signes d'identification, par exemple au moyen d'ondes électromagnétiques, telles que ondes lumineuses et/ou ondes radio.

8. Dispositif pour surveiller l'efficacité opérationnelle d'une grille mobile avec oreilles de palette (6), utilisé pour le transport des matériaux exposés à des charges thermiques et/ou mécaniques élevées, en particulier pour exécuter la méthode selon l'une quelconque des revendications précédentes, comprenant une unité centrale (5) pour l'enregistrement, l'affectation, l'évaluation, le stockage et/ou la génération de signaux de valeur de mesure, un moyen mesurant la distance (4) affecté au chemin de retour de la grille mobile sur son chemin de circulation, de préférence vers le côté de retour (7) des grilles mobiles, et incluant au moins un capteur de distance (4'), de préférence un capteur de réflexion laser, pour la mesure de la distance sans contact d'une partie de la grille mobile, et au moins un moyen d'identification (3) pour identifier un wagon à palette (6) sur ladite grille mobile.

9. Dispositif selon la revendication 8, dans lequel une pluralité de capteurs de distance (4') sont disposés sur au moins une ligne dans le moyen de mesure (4) et peuvent être éventuellement mis en marche de manière sélective.

10. Dispositif selon les revendications 8 ou 9, dans lequel le moyen de mesure (4) comprend un moyen de refroidissement éventuellement par refroidissement d'air, et le moyen de mesure (4) fonctionne de manière continue au cours du processus.

11. Dispositif selon l'une quelconque des revendications 8 à 10, comprenant un moyen d'identification (3), qui par exemple est constitué d'un scanner de code-barres, pour le balayage sans contact d'un signe d'identification (2) sur le wagon à palettes respectif (6) qui, lors de l'envoi des signaux de valeur de la mesure de l'identification peut être coupé jusqu'au balayage du wagon à palette suivant (8).

12. Dispositif selon l'une quelconque des revendications 8 à 11, dans lequel le moyen d'identification (3) est activé par un détecteur de position (1) pour le wagon à palette respectif (6) qui comprend par exemple un capteur optique, acoustique ou inductif.

13. Dispositif selon l'une quelconque des revendications 8 à 12, dans lequel le détecteur de position (1) est réglable pour affecter les signaux de valeur de mesure de la distance aux signaux de valeur de mesure de l'identification.

14. Dispositif selon l'une quelconque des revendications 8 à 13, dans lequel les signes d'identification (2) sont chacun disposés des deux côtés du wagon à palette (6) au même point du milieu et/ou le signe d'identification (2) inclut un code-barres lisible automatiquement, éventuellement complété par un numéro de wagon à palette lisible à l'oeil nu.
